# EUROPEAN PATENT APPLICATION

(11) **EP 2 878 847 A1**
(43) Date of publication of application: **03.06.2015**
(21) Application number: 13822954.7
(22) Date of filing: 25.07.2013
(51) Int. Cl.: F16D 65/18, F16D 65/14, F16H 1/32, F16H 13/08, F16H 25/06

(54) **ELECTRIC DISC BRAKE DEVICE**

(30) Priority: 26.07.2012 JP 2012165357; 07.11.2012 JP 2012245674
(71) Applicant: AKEBONO BRAKE INDUSTRY CO., LTD., Tokyo 103-8534 (JP)
(72) Inventor: SEKIGUCHI Kazuhiro, Tokyo 103-8534 (JP); KAKIZAKI Hideki, Tokyo 103-8534 (JP)
(74) Representative: Grünecker Patent- und Rechtsanwälte PartG mbB
(86) International application number: PCT/JP2013/070234
(87) International publication number: WO 2014/017609

(57) **Abstract**

An electric actuator pushes the piston (11a) out towards the rotor. The electric actuator comprises a reduction gear (10a), a ball reduction gear (19), and a feed screw device (12a). A compression coil spring (43) applies a pre-load on each ball (24) that configures the ball reduction gear (19) and provides resistance to the functioning of the ball reduction gear (19). Immediately after initiating braking, said ball reduction gear (19) is not actuated.

## Description

### Technical Field

The present invention relates to an improved electric disc brake apparatus.

### Background Art

Compared with a conventional hydraulic disc brake that has been used widely, an electric disc brake apparatus using an electric motor as a drive source is advantageous in many respects; for example, in one respect, no piping is necessary, fabrication is easy, and costs involved are low, in another respect, loads on the environment are reduced because brake fluid as working fluid is not used, and in the other respect, since no brake fluid movement is involved, the response is improved accordingly. Thus, the research of electric brake apparatuses has still been in progress. In this type of electric disc brake apparatus, a rotational motion of the electric motor needs to be transformed into a linear motion while being increased so that a pair of pads are pressed strongly against both side surfaces of a rotor. In view of these situations, there have conventionally been proposed various types of electric disc brake apparatuses in which a gear type speed reduction machine and a screw, ball ramp or cam roller type power boosting device are combined as described in Patent Documents 1 to 8.

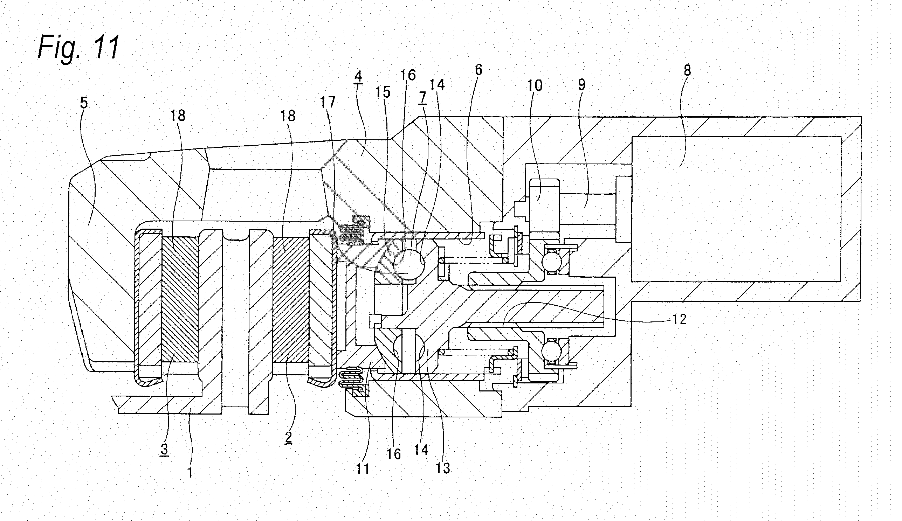

Fig. 11 shows one example of a conventional construction of an electric disc brake apparatus described in Patent Document 2. Similar to a general hydraulic disc brake, in this electric disc brake apparatus, an inboard pad 2 and an outboard pad 3 are provided so as to hold therebetween a rotor 1 which rotates together with a wheel and are made to be displaced in the direction of an axis of the rotor 1. Because of this, a support (whose illustration is omitted) is supported on a body (fixed to a knuckle which makes up a suspension apparatus) in such a state as to lie adjacent to the rotor 1. The inboard pad 2 and the outboard pad 3 are supported on the support so as to be displaced in the axial direction (an outboard side means an outboard side in a transverse direction of the body when installed on the body, and an inboard side means an inboard side in the transverse direction of the body in the same condition. Additionally, otherwise described particularly, the axial direction means the direction of the rotational axis of the rotor 1. All these are true in the description and all claims.) in such a state that the inboard pad 2 and the outboard pad 3 hold the rotor 1 from both sides in the axial direction.

Additionally, a caliper 4 is assembled to the support so as to be displaced in the axial direction. In this caliper 4, a caliper claw 5 is provided at an outer end portion, and a cylinder space 6 is provided in an interior of an inner end portion. Then, the caliper claw 5 faces an outer surface of the outboard pad 3, and the inboard pad 2 is pressed towards an inner surface of the rotor 1 by a thrust generation device 7 which is provided within the cylinder space 6. In application of the brake, when the inboard pad 2 is pressed against the inner surface of the rotor 1 by the thrust generation device 7, the caliper 4 is displaced to the inboard side, and the caliper claw 5 presses the outboard pad 3 against an outer surface of the rotor 1. As a result of this, the rotor 1 is held strongly from both the sides thereof, whereby the brake is applied. The configuration and operation described above are similar to those of hydraulic disc brakes that are widely used.

In the case of the electric disc brake apparatus, the inboard pad 2 is pressed against the inner surface of the rotor 1 using an electric motor 8 as a drive source, and therefore, a gear type speed reduction machine 10, the thrust generation device 7, and a piston 11 are provided between an output shaft 9 of the electric motor 8 and an inner surface of the inboard pad 2. The rotational force which is decelerated and whose torque is increased by the speed reduction machine 10 is transferred to a drive side rotor 13 which makes up a ball ramp type power boosting device via a feed-screw device 12, and the drive side rotor 13 is rotated. This drive side rotor 13 is translated towards the outboard side by means of the function of the feed-screw device 12 until gaps between the inboard pad 2 and the outboard pad 3 and the surfaces of the rotor 1 are eliminated. In contrast with this, the drive side rotor 13 rotates after the gaps are eliminated and the feed-screw device 12 is stopped functioning. Then, a space defined between the drive side rotor 13 and a driven side stator 15 which is added to an inner surface of the piston 11 is expanded with a large force based on an engagement (a rolling contact) between a plurality of drive side ramp grooves 14, 14 which are provided on an outer surface of the drive side rotor 13 and a plurality of driven side ramp grooves 16, 16 which are provided on an inner surface of the driven side stator 15 and a plurality of balls 17 which are held between both the ramp grooves 14, 16. As a result of this, an outer surface of the piston 11 is pressed strongly against the inner surface of the inboard pad 2.

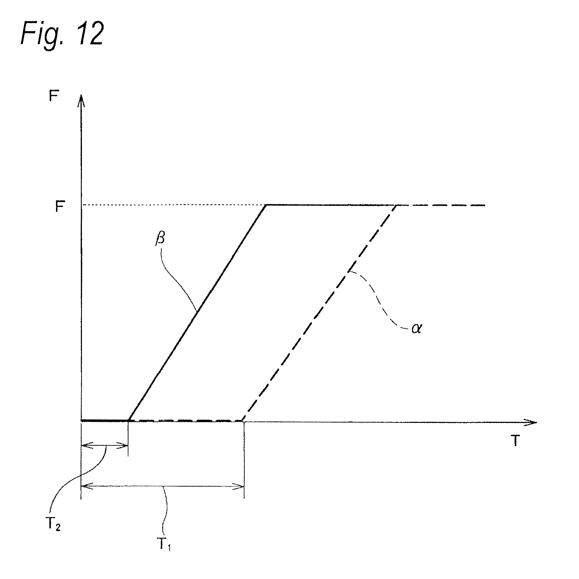

The electric disc brake apparatus having the conventional construction described above cannot necessarily increase the braking force which is produced in association with bringing the inboard pad 2 and the outboard pad 3 into press contact against both the surfaces of the rotor 1 to a sufficient level. The braking force can, of course, be increased by increasing the speed reduction ratio of the speed reduction machine 10, increasing the speed reduction ratio of the feed-screw device 12 (decreasing a pitch of the screw) or making less steep the inclination angles of the drive-side lamp grooves 14 and the driven-side ramp grooves 16. However, in case the speed reduction ratio of the speed reduction machine 10 or the feed-screw device 12 is increased, a longer time is required until the inboard pad 2 and the outboard pad 3 advance from a non-braking position to a braking position where linings 18, 18 of the inboard pad 2 and the outboard pad 3 are pressed against both the inner and outer surfaces of the rotor 1. Namely, in the non-braking state, a clearance is present between both the surfaces of the rotor 1 and frictional surfaces of both the linings 18, 18, and therefore, this clearance needs to be eliminated to exhibit the braking force. In case the speed reduction ratio is increased, a time required to eliminate the clearance becomes longer, deteriorating the response of the electric disc brake apparatus. This will be described by reference to Fig. 12.

In Fig. 12, an axis of ordinates represents the magnitude of a braking force (P) which is produced when the linings are pressed against the surfaces of the rotor, and an axis of abscissas represents a time (T) which has elapsed since an activation of the electric motor 8. Additionally, a broken line α shows the results of the conventional construction described above. Further, F in the middle of the axis of ordinates indicates a required braking force value. As is obvious from the broken line α, in the case of the conventional construction, there is a time lag of a time T₁ between the abutment of the linings 18, 18 with both the surfaces of the rotor 1 and the production of a braking force. Then, this time lag of the time T₁ becomes longer as the speed reduction ratio of the speed reduction machine 10 or the feed-screw device 12 becomes larger. In an attempt to ensure a certain pedal stroke as well, it is difficult to make less steep the inclination angles of the drive side ramp grooves 14 and the driven side ramp grooves 16. Therefore, it is difficult to obtain sufficient effectiveness by making less steep the inclination angles of those ramp grooves 14, 16 from the viewpoint of making ensuring the braking force compatible with shortening the time which elapses until the braking force is produced.

Patent Document 9 is a publication which describes the related art to the invention. Patent Document 9 describes the basic configuration of the ball type speed reduction machine which is incorporated in an electric disc brake apparatus of the invention. Although a specific configuration of the ball type speed reduction machine which is incorporated in an embodiment of the invention, which will be described later, differs from the specific configuration described in Patent Document 9, in carrying out the invention, it is also possible to make use of the construction of the ball type speed reduction machine described in Patent Document 9.

### Citation List

### Patent Document

[Patent Document 1] JP-A-2000-297834
[Patent Document 2] JP-A-2004-169729
[Patent Document 3] JP-A-2007-093008
[Patent Document 4] JP-A-2007-247683
[Patent Document 5] JP-A-2010-038307
[Patent Document 6] JP-A-2010-265971
[Patent Document 7] JP-A-2010-266005
[Patent Document 8] JP-A-2010-266006
[Patent Document 9] JP-B-07-062495

### Summary of Invention

### Technical Problem

The invention has been made in view of these situations, and an object thereof is to provide an electric disc brake apparatus having a construction which can increase a braking force to be produced and which can shorten as required the time required before the production of a braking force.

### Solution to Problem

The above object of the invention is achieved by the following configurations.
(1) An electric disc brake apparatus including:
   a rotor configured to rotate together with a wheel;
   a pad support portion which is supported on a body so as to lie adjacent to the rotor (the support portion corresponds to a support of a floating caliper type disc brake or a caliper of an opposed piston type disc brake.);
   a pair of outboard and inboard pads which are supported on the pad support portion so as to be displaced in an axial direction while holding the rotor from both sides thereof in the axial direction;
   a piston which is provided in a cylinder space which is provided so as to face at least one of the pair of pads, so as to be displaced in the axial direction of the rotor; and
   an electric actuator which is displaced by an electric motor functioning as a drive source in a direction in which the piston is pushed out of the cylinder space to thereby bring both the pair of pads into press contact with both axial surfaces of the rotor, wherein
   the electric actuator has the electric motor, a ball type speed reduction machine and a converter device, wherein
   the electric motor has an output shaft which is driven to rotate in both directions when energized, wherein
   the ball type speed reduction machine includes an anchor plate which is provided at a deep end portion of the cylinder space in such a state that the anchor plate is prevented from rotating when the ball type speed reduction machine operates and from being displaced axially in a direction in which the anchor plate moves away from the piston, an input shaft which is provided in such a state that the input shaft is inserted through a through hole provided in a central portion of the anchor plate and which is configured to rotate in both directions when the electric motor is energized, an annular ball retaining member which moves eccentrically relative to a rotational center of the input shaft as the input shaft rotates, a plurality of balls which are retained in a rolling manner in a plurality of circumferential locations on the ball retaining member, and a guide groove which is formed on at least one of a pair of surfaces which hold the balls along an axial direction of the piston and which is formed into a cycloidal curve as its circumferential shape and is configured to take out a rotational motion of the ball retaining member as an output, and
   the converter device converts the rotational output of the ball type speed reduction machine into a straight-line motion to displace the piston in the axial direction.
(2) The electric disc brake apparatus according to (1) above, wherein
   the electric actuator comprises a presser member and a feed-screw member which make up the converter device and a preloading member in addition to the electric motor and the ball type speed reduction machine,
   the piston has a bottomed cylindrical shape in which a distal side which is an end portion facing the pad is closed by a bottom portion and a proximal side is opened,
   the presser member has a threaded hole in a central portion and is incorporated in the piston at a portion closer to the bottom portion so as to be prevented from rotating relative to the piston and to be displaced in the axial direction relative to the piston,
   the feed-screw member has an external thread portion which is provided from a distal end portion which is an end portion closer to the bottom portion of the piston to a middle portion for screw engagement with the threaded hole and a thrust bearing collar portion having an outwardly oriented flange-like shape which is provided at a proximal end portion,
   the preloading member imparts a force to hold elastically the balls between the pair of surfaces configured to hold the balls therebetween to produce a resistance against the balls attempting to roll so as to impart a resistance against relative rotation between the input shaft which is an input portion of the ball type speed reduction machine and the external thread portion which is an output portion of the same, and
   a magnitude of a resistance imparted to the relative rotation between the input shaft and the external thread portion by the preloading member is larger than a resistance against an axial movement of the presser member imparted by a screw engagement between the external thread portion and the threaded hole which occurs in association with rotation of the feed-screw member in a non-braking state in which a separation occurs at least either between a distal end portion of the presser member and an inner surface of the bottom portion of the piston or between the side surfaces of the rotor and linings of the pads.
(3) The electric disc brake apparatus according to (2) above, wherein
   the preloading member is a compression coil spring, wherein the compression coil spring is retained within a cylindrical spring holder which includes an inwardly oriented locking collar portion at a distal end portion,
   a proximal end portion of the spring holder is locked on the anchor plate in such a state that the locking collar portion is prevented from being displaced in a direction in which it moves away from the anchor plate, and
   the compression coil spring is provided between the locking collar portion and the thrust bearing collar portion in such a state that the coil compression spring is compressed elastically along the full length thereof.
(4) The electric disc brake apparatus according to (3) above, wherein
   the ball retaining member is an annular cage,
   the balls are provided in a rolling manner within pockets which are provided at a plurality of circular locations on the cage, and
   the cage and the thrust bearing collar portion are connected together by a coupling configured to transfer a rotational motion of the cage while permitting an eccentric motion of the cage.
(5) The electric disc brake apparatus according to (4) above, wherein
   the guide groove is provided on a surface of the anchor plate which faces the thrust bearing collar portion, and
   the guide groove has a hypocycloidal or epicycloidal curvilinear shape as its shape along a center line thereof and as its sectional shape an arc-like shape having a radius of curvature which is larger than one half a diameter of each ball.
(6) The electric disc brake apparatus according to anyone of (1) to (5) above, wherein
   the guide groove is provided on either of the pair of surfaces which hold the balls therebetween and a reinforcement member is embedded in a portion of the other surface with which the balls are brought into rolling contact, the reinforcement member being made of a harder material than a material of which a member having the other surface is made.
(7) The electric disc brake apparatus according to (6) above, wherein
   a raceway surface is provided on the reinforcement member, the raceway surface having a sectional shape which is partially formed into an arc-like shape having a radius of curvature which is equal to or larger than one half the diameter of each ball.
(8) The electric disc brake apparatus according to (6) above, wherein
   a partially spherical, convexly curved surface is provided on the reinforcement member.

According to the electric disc brake apparatus configured as described under (1) above, the linings of the pair of pads can be pressed strongly against both the surfaces of the rotor by means of a large boosting ratio which corresponds to a large speed reduction ratio obtained by the ball type speed reduction machine, thereby making it possible to obtain a large braking force.

Further, as with the electric disc brake apparatus configured as described under (2) above, in case the magnitude of the resistance imparted to the relative rotation between the input shaft and the external thread portion is made larger than the resistance to the axial movement of the presser member in the axial direction in the non-braking state, the time required before the production of a braking force can be shortened.

Namely, according to the electric disc brake apparatus configured as described under (2) above, the ball type speed reduction machine is kept inoperable during which the gaps existing between the surfaces of the rotor and the frictional surfaces of the linings of both the pads are narrowed to be nil (eliminated), and the input shaft and the feed-screw member rotate in synchronism with each other. Then, the presser member presses the pads towards the rotor by the piston based on the screw engagement between the external thread portion of the feed-screw member and the threaded hole of the presser member, whereby the gaps are narrowed to be nil. While the gaps are being so narrowed, the rotational speed of the feed-screw member can be increased, and therefore, the time required before the production of a braking force can be shortened by narrowing the gaps to be nil. After the gaps are eliminated and the resistance against the displacement of the presser member towards the rotor is increased, the ball type speed reduction machine operates, and the feed-screw member rotates based on a large force (torque). As a result of this, the frictional surfaces of the linings of both the pads are pressed strongly against both the surfaces of the rotor, generating a large braking force.

### Brief Description of Drawings

[Fig. 1] Fig. 1 is a sectional view of a main part of a first example of an embodiment of the invention.
[Fig. 2] Fig. 2 is an enlarged view of a lower half portion of Fig. 1.
[Fig. 3] Fig. 3 is an exploded perspective view of an electric actuator shown in Fig. 2 with part of constituent members taken out.
[Fig. 4] Figs. 4(A) to (C) are perspective views as seen from an axial direction which illustrate the function of a ball type speed reduction machine.
[Fig. 5] Fig. 5 is a sectional view of a main part of a second example of the embodiment of the invention.
[Fig. 6] Fig. 6 is an enlarged view of a portion X of Fig. 5.
[Fig. 7] Fig. 7 is a perspective view of a feed-screw member taken out of the main part shown in Fig. 6 which shows a state as seen from the side of a thrust bearing collar portion.
[Fig. 8A] Fig. 8A is an enlarged sectional view taken along a line Y-Y in Fig. 7.
[Fig. 8B] Fig. 8B is an enlarged sectional view of a reinforcement member shown in Fig. 8A.
[Fig. 9] Fig. 9 is a perspective view of a feed-screw member of a third example of the embodiment which is taken out thereof, showing a state as seen from the side of a thrust bearing collar portion.
[Fig. 10] Fig. 10 is a section view taken along a line Z-Z in Fig. 9
[Fig. 11] Fig. 11 is a sectional view showing one example of a conventional construction.
[Fig. 12] Fig. 12 is a diagram showing a relationship between time elapsing from an activation of an electric motor and a magnitude of a braking force produced by pressing by linings.

### Description of Embodiments

### [First Example of Embodiment]

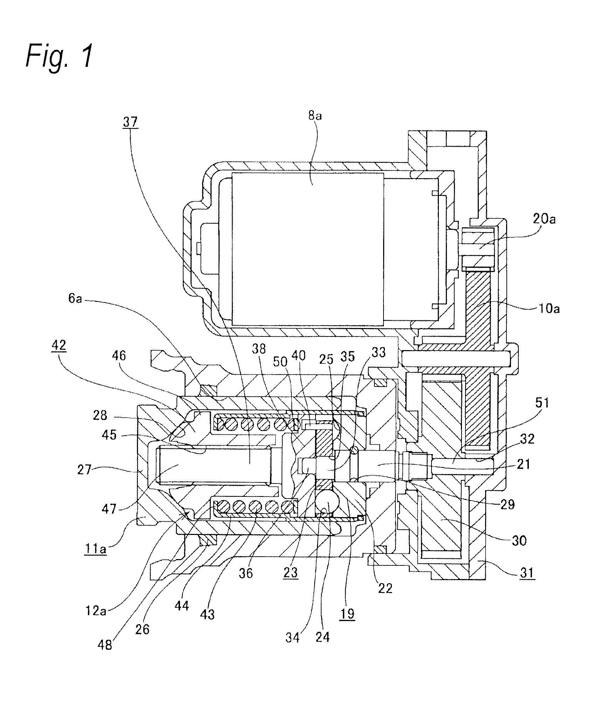

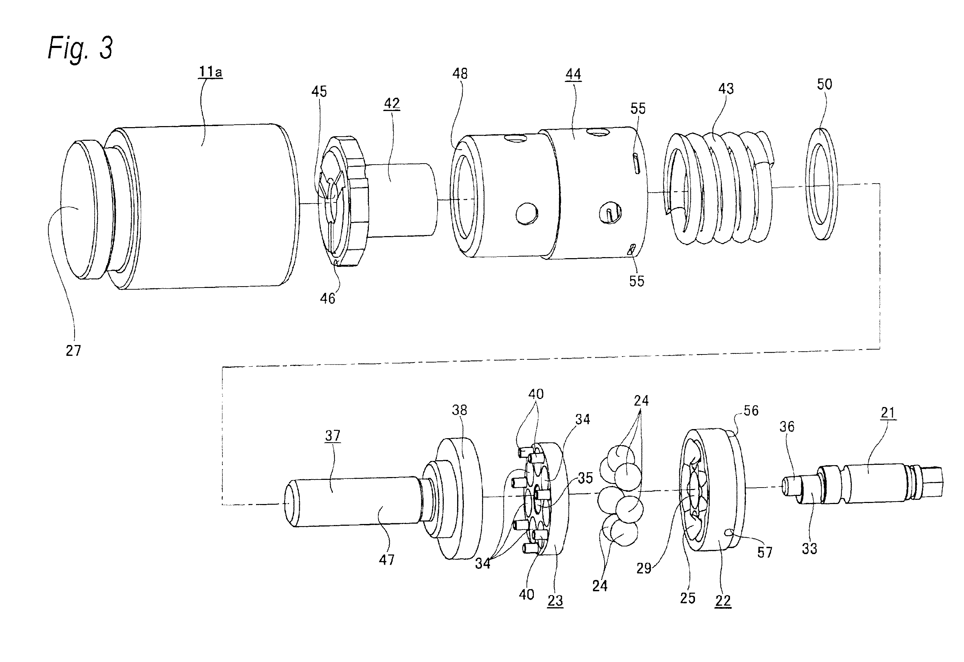

Figs. 1 to 4 show a first example of an embodiment of the invention which corresponds to the configurations (1) to (5) described above. An electric disc brake apparatus of the first example is characterized in that a ball type speed reduction machine 19 is disposed in series along a direction in which force is transferred in a halfway position of an electric actuator and that the ball type speed reduction machine 19 is configured to operate only when a large force is transferred. According to the construction of the first example, by adopting the characteristic configurations described above, when braking is started, gaps existing between both surfaces of a rotor 1 and frictional surfaces of linings 18, 18 (refer to Fig. 11) of an inboard pad 2 and an outboard pad 3 are narrowed to be nil quickly, whereafter the frictional surfaces of both the linings 18, 18 are pressed strongly against the surfaces of the rotor 1, thereby making it possible to produce a large braking force. The other portions including the construction shown in Fig. 11 are similar to the conventionally known constructions, and therefore, illustrations and descriptions which will repeat what is known will be omitted or what is known will briefly be illustrated or described. Thus, the following description will be centered on the characteristic parts of the first example. In the following description of the embodiment, a left end side in Figs. 1 to 3, which constitutes an end facing or lying closer to the rotor 1, is understood to be a distal end, while a right end, which is an opposite end, in Figs. 1 to 3 is understood to be a proximal end.

An electric actuator which is incorporated in the electric disc brake apparatus of the first example includes an electric motor 8a, a gear type speed reduction machine 10a, a ball type speed reduction machine 19, and a feed-screw device 12a which is a converter device. A piston 11 a which is fittingly installed in a cylinder space 6a is pushed out towards the rotor 1 by the electric motor 8a via both the speed reduction machines 10a, 19 and the feed-screw device 12a, producing a braking force. A seal ring 26 is provided between an outer circumferential surface of the piston 11 a and an inner circumferential surface of the cylinder space 6a with the piston 11 a fitted in the cylinder space 6a. In this state, a force to restrict the rotation of the piston 11 a is exerted on the piston 11 a based on a frictional force of the seal ring 26. This piston 11 a has a bottomed cylindrical shape. Namely, a distal side of this piston 11 a is closed by a bottom portion 27, while a proximal side is opened. Further, a portion of an inner surface of the bottom portion 27 which lies radially outwards is made into a bearing surface 28 which is formed into a partially conical recess surface.

The electric motor 8a has an output shaft 20a which is driven to rotate in both directions when energized. Similar to a conventional construction shown in Fig. 11, the gear type speed reduction machine 10a is made up of a plurality of gearwheels which are in meshing engagement, and its speed reduction ratio is set, for example, to "16." Consequently, an input shaft 21 of the ball type speed reduction machine 19, which will be described next, is rotated once by the speed reduction machine 10a while the output shaft 20a of the electric motor 8a rotates 16 times or rotations, whereby the torque is increased 16 times.

In addition to the input shaft 21, the ball type speed reduction machine 19 includes an anchor plate 22, a cage 23 which is a ball retaining member, a plurality of balls 24, 24 and a guide groove 25. An anchor plate 22 is provided at a deep end portion of the cylinder space 6a.

The input shaft 21 is provided in such a state that it is inserted through a through hole 29 provided in a central portion of the anchor plate 22 and rotates in both directions when the electric motor 8a is energized. Because of this, a non-circular portion (for example, a hexagonal prism portion) which is provided at a proximal end portion of the input shaft 21 fits in a non-circular hole portion (for example, a hexagonal hole portion) which is formed at a distal half portion of a center hole in a speed reducing large gearwheel 30 which is provided at a final gear of the speed reduction machine 10a. A support shaft 51 which fits in a circular hole portion which is formed from a middle portion to a proximal end portion of the center hole of the speed reducing large gearwheel 30 is fitted rotatably in a circular proximal side support hole 32 which is provided on an inner surface of a casing 31. An eccentric shaft portion 33 is provided at a portion of the input shaft 21 which lies slightly closer to a distal end thereof. A center shaft of the eccentric shaft portion 33 is provided parallel to a rotational center of the input shaft 21 and is eccentric relative to the rotational center.

The cage 23 is formed into an annular shape, and circular pockets 34, 34 are formed at a plurality of locations (seven locations in the illustrated example) which are provided circumferentially at equal intervals on the cage 23. Then, the balls 24, 24 are retained in a rolling manner in the pockets 34, 34. Additionally, a circular center hole 35 is formed in a central portion of the cage 23, and in the circular center hole 35, the eccentric shaft portion 33 which is provided at a portion of a middle portion of the input shaft 21 which lies slightly closer to the distal end thereof is inserted therethrough rotatably and without any radial looseness. A support shaft portion 36 is provided at a distal end portion of the input shaft 21 so as to protrude from a distal end face of the eccentric shaft portion 33. Then, this support shaft portion 36 is supported rotatably in a circular distal side support hole 39 which is provided in a central portion of a proximal surface of a thrust bearing collar portion 38 of a feed-screw member 37 which makes up the feed-screw device 12a. The distal side support hole 39, the proximal side support hole 32 and the through hole 29 are concentric with one another. On the other hand, a center axis of the center hole 35 through which the eccentric shaft portion 33 is inserted is eccentric relative to center axes of the distal side support hole 39, the proximal side support hole 32 and the through hole 29. Consequently, the cage 23 moves eccentrically relative to the rotational center of the input shaft 21 as the input shaft 21 rotates. A circumferential portion of the distal side support hole 39 formed in the proximal surface of the thrust bearing collar portion 38 is formed into a flat surface. It is preferable to give a hardening treatment such as a quenching or carbo-nitriding treatment to at least the circumferential portion of the distal side support hole 39 which constitutes a portion where the balls 24, 24 contact in the proximal surface of the thrust bearing collar portion 38.

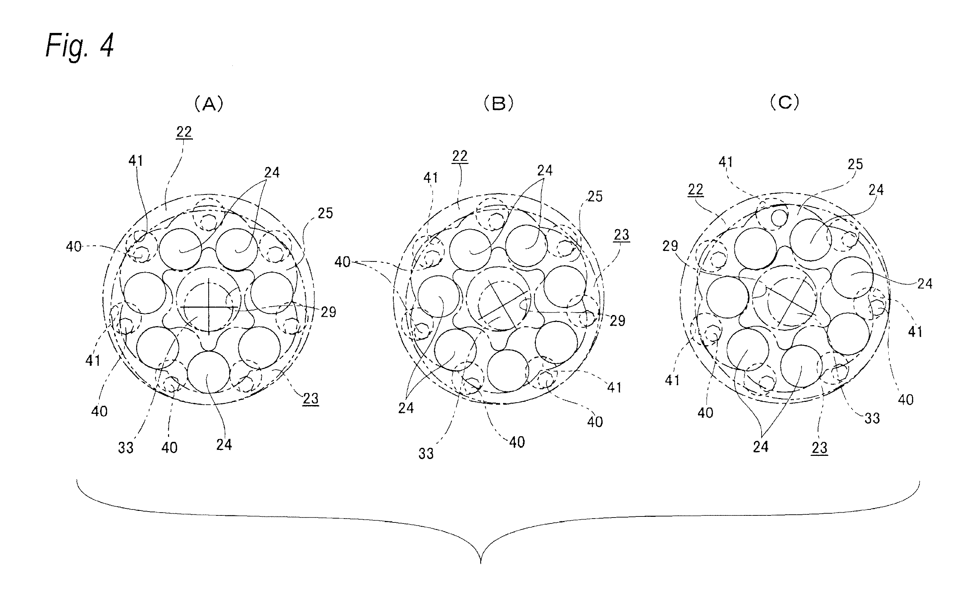

The guide groove 25 is formed on a surface of the anchor plate 22 which faces the thrust bearing collar portion 38. The guide groove 25 has a hypocycloidal or epicycloidal curvilinear shape as its shape along a center line thereof and as its sectional shape an arc-like shape having a radius of curvature which is larger than one half a diameter of the balls 24, 24. The number of waveforms in the hypocycloidal curve and the epicycloidal curve is smaller by one than the number of balls 24, 24 (six in the illustrated example). With retained in the pockets 34, 34 of the cage 23, the balls 24, 24 circulate along the groove 25 by repeating states shown in Figs. 4 (A) to (C) in the order of (A) → (B) → (C) in association with the eccentric motion of the cage 23 while being brought into engagement with any circumferential portions of the groove 25. In association with the circulating movement, some balls 24, 24 of the balls 24, 24 push on inner surfaces of some pockets 34, 34 of the pockets 34, 34, whereby the cage 23 is rotated. In short, the cage 23 rotates while moving eccentrically. In the case of the first example, the cage 23 rotates once or one whole rotation while the input shaft 21 rotates seven times or whole rotations (the speed reduction ratio of the ball type speed reduction machine 19 is seven).

Then, the rotational motion of the cage 23 is taken out to the feed-screw member 37 by a coupling such as an Oldham's coupling. This coupling needs to have a construction to take out the rotational motion of the cage 23 while permitting the eccentric motion thereof. Because of this, in the case of the first example, transfer pins 40, 40 are provided on either one of surfaces of the cage 23 which faces the thrust bearing collar portion 38 or one of surfaces of the thrust bearing collar portion 38 which faces the cage 23 (in this illustrated example, the surface of the cage 23) so as to project therefrom, and circular receiving recess holes 41, 41 are formed in the other surface (in this illustrated example, the surface of the thrust bearing collar portion 38). When the cage 23 rotates while moving eccentrically, some of the transfer pins 40, 40 are brought into engagement with some of the receiving recess holes 41, 41, whereby the rotational motion of the cage 23 is taken out to the feed-screw member 37.

A rotational output from the ball type speed reduction machine 19 is converted into a straight-line motion by the feed-screw device 12a which includes the feed-screw member 37, whereby the piston 11 a is displaced in the axial direction. The feed-screw device 12a includes the feed-screw member 37, a presser member 42, a compression coil spring 43 which is a preloading member, and a spring holder 44. In these constituent members, the presser member 42 has a threaded hole 45 in a central portion thereof. Additionally, this presser member 42 is incorporated in the piston 11 a at a portion which lies close to the bottom portion 27 so as not only to be prevented from rotating relative to the piston 11 a but also to be displaced in the axial direction relative to the piston 11 a. This brings an outer circumferential edge of a collar portion 46 which is formed on an outer circumferential surface of the presser member 42 into non-circular engagement with an inner circumferential surface of the piston 11a. Further, a distal end face of the presser member 42 is formed into a partially conical projecting surface so that the distal end face is brought into abutment with the bearing surface 28 which constitutes a deep end face of the piston 11 a over as wide an area as possible.

In the feed-screw member 37, an external thread portion 47 is provided at a central portion of a distal side surface of the thrust bearing collar portion 38 so as to project therefrom, and this external thread portion 47 is screwed into the threaded hole 45 in the presser member 42. Then, the presser member 42 is displaced in the axial direction of the piston 11 a in association with rotation of the feed-screw member 37.

Further, the thrust bearing collar portion 38 of the feed-screw member 37 is elastically pressed towards the anchor plate 22 by the spring holder 44 and the compression coil spring 43 to thereby impart a preload to the balls 24, 24 which make up the ball type speed reduction machine 19. An inwardly oriented flange-like locking collar portion 48 is provided at a distal end portion of the spring holder 44 by being bent at right angles radially inwardly. Locking projecting pieces 49, 49 which project from an inner circumferential surface of a proximal end portion of the spring holder 44 are formed at a plurality of circumferential locations on the proximal end portion of the spring holder 44 by crimping a portion between circumferentially elongated holes 55, 55 which are provided at a plurality of circumferential locations on the proximal end portion of the spring holder 44 and a proximal edge of the spring holder 44. Then, the locking projecting pieces 49, 49 are brought into engagement with locking stepped portion 56 of the anchor plate 22 to thereby prevent the spring holder 44 from being displaced in a direction in which the spring holder 44 moves away from the anchor plate 22. Further, a distal end portion of an engaging pin which is inserted through a circular hole (whose illustration is omitted) in the spring holder 44 is fitted in an engaging recess portion 57 which is provided on an outer circumferential surface of the anchor plate 22 to be fixed in place therein, whereby the spring holder 44 and the anchor plate 22 rotate in synchronism with each other. In this state, the compression coil spring 43 is provided together with a seat plate 50 between the locking collar portion 48 and the thrust bearing collar portion 38 in such a state that the compression spring 43 is elastically compressed along the full length thereof.

In the case of the first example, the balls 24, 24 are preloaded by the configuration described above, producing a resistance to the rolling of the balls 24, 24. Then, a resistance is imparted to the relative rotation between the input shaft 21 which constitutes an input portion of the ball type speed reduction machine 19 and the external thread portion 47 which constitutes an output portion of the same. A magnitude of this resistance is made larger than a resistance against the axial movement of the presser member 42 which occurs by means of a threaded engagement between the external thread portion 47 and the threaded hole 45 which is triggered in association with rotation of the feed-screw member 37 when a separation occurs at least either between the distal end portion of the presser member 42 and the inner surface of the bottom portion 27 of the piston 11 a or between both the surfaces of the rotor 1 and the linings 18, 18 of both the pads 2, 3 in a non-braking state. Namely, the input shaft 21 and the external thread portion 47 are made to rotate in synchronism with each other (so that the ball type speed reduction machine 19 does not function) in case a force is allowed to remain small which is required to displace the presser member 42 towards the distal side. In contract with this, in case the distal end portion of the presser member 42 is brought into abutment with the inner surface of the bottom portion 27 of the piston 11 a and the both the surfaces of the rotor 1 are brought into abutment with the corresponding linings 18, 18 of the pads 2, 3 to thereby increase the resistance at the thread engagement portion between the external thread portion 47 and the threaded hole 45, the ball type speed reduction machine 19 starts to function, and the external thread portion 47 rotates with a large torque which is large enough (seven times) to match the speed reduction ratio of the ball type speed reduction machine 19.

According to the electric disc brake apparatus of the first example which is configured as has been described heretofore, the time required before the production of a braking force can be shortened, and moreover, a braking force to be produced can be increased. Hereinafter, the reasons for the shortening of the time and the increase in braking force to be produced will be described while describing the process of producing a braking force by the construction of the first example.

In a non-braking state, the distal end portion of the presser member 42 and the inner surface of the bottom portion 27 of the piston 11 a are in abutment with or are slightly separated from each other. Additionally, both the surfaces of the rotor 1 and the linings 18, 18 of both the pads 2, 3 are slightly separated from each other. When the input shaft 21 is rotated from this state via the speed reduction machine 10a by energizing the motor 8a to produce a braking force, the ball type speed reduction machine 19 does not operate, and the input shaft 21, the feed-screw member 37, and the anchor plate 22, the cage 23, the balls 24 and spring holder 44 which make up the ball type speed reduction machine 19 rotate in synchronism. As this occurs, the speed reduction ratio between the output shaft 20a of the electric motor 8a and the feed-screw member 37 becomes "16" which is the speed reduction ratio of the gear type speed reduction machine 10a. Consequently, the feed-screw member 37 is rotated at high speeds, and the presser member 42 is displaced quickly towards the distal side, whereby the distal end portion of the presser member 42 is brought into abutment with the inner surface of the bottom portion 27 of the piston 11 a within a short period of time. Further, the linings 18,18 of both the pads 2, 3 can be brought into abutment with the corresponding surfaces of the rotor 1.

When the distal end portion of the presser member 42 is brought into abutment with the inner surface of the bottom portion 27 of the piston 11 a and further, the linings 18, 18 of both the pads 2, 3 are brought into abutment with the corresponding surfaces of the rotor 1, the resistance against the displacement of the presser member 42 towards the rotor 1 is increased. Then, the proximal surface of the anchor plate 22 is pressed against the deep end face of the cylinder space 6a based on the axial thrust between the presser member 42 and the feed-screw member 37, whereby the anchor plate 22 is prevented from rotating relative to the cylinder space 6a and hence to the piston 11a. Then, the balls 24, 24 which make up the ball type speed reduction machine 19 start rolling between the guide groove 25 on the anchor plate 22 and the proximal surface of the thrust bearing collar portion 38 of the feed-screw member 37. Namely, the ball type speed reduction machine 19 starts operating, and the feed-screw member 37 rotates with the large force which matches the speed reduction ratio of the ball type speed reduction machine 19. In the case of the first example, since the speed reduction ratio of the ball type speed reduction machine 19 is "7," the feed-screw member 37 rotates with the torque which is larger by 112 (16x7) times the torque of the output shaft 20a of the electric motor 8a. In reality, although the resulting torque does not become 112 times larger than the torque of the electric motor 8a due to the presence of a friction loss, this friction loss should be a small value. Thus, the feed-screw member 37 is rotated with the large torque at the final stage of the braking operation, and the piston 11 a is pressed towards the rotor 1 with the large force by the presser member 42, thereby making it possible to obtain the large braking force.

In the case of the first example, the ball type speed reduction machine 19 comes into operation finally to obtain the large speed reduction ratio (the torque increase ratio), and therefore, the speed reduction ratios of the gear type speed reduction machine 10a and the feed-screw device 12a are suppressed to small values. Consequently, assuming that the braking forces which are finally required are the same, as indicated by a solid line β in Fig. 12, a time T₂ required until a braking force is started to be produced as a result of the linings 18, 18 being brought into abutment with both the sides of the rotor 1 can be made shorter than a time T₁ which is required in the conventional construction (T₂<T₁). To describe this the other way round, in case a time lag which is almost the same as the time lag in the conventional construction is permitted, a braking force to be obtained becomes larger.

### [Second Example of Embodiment]

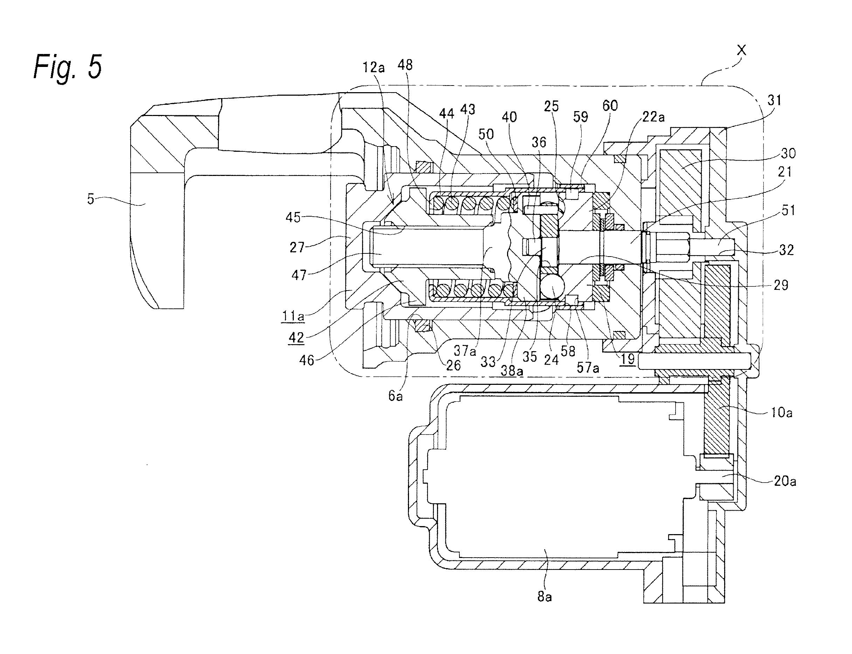

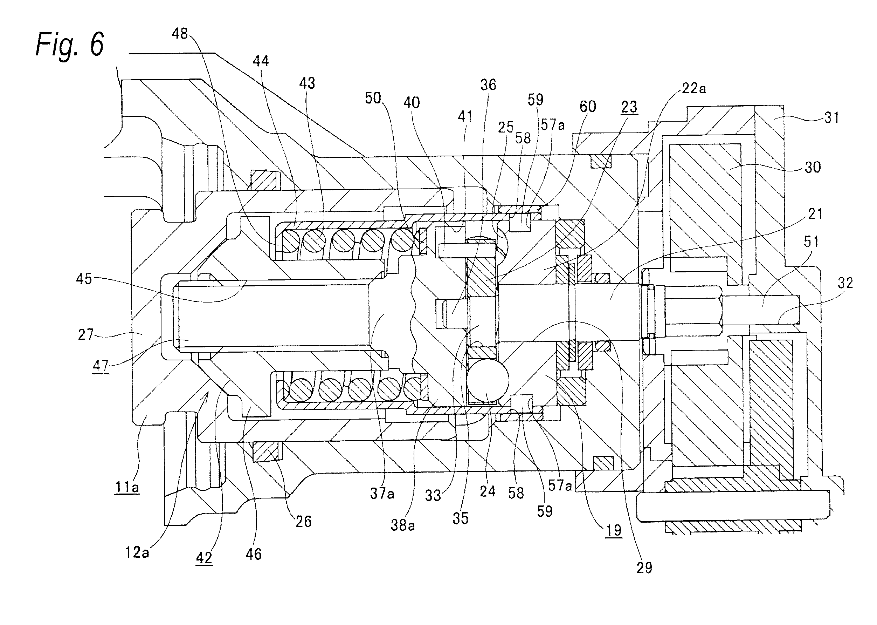

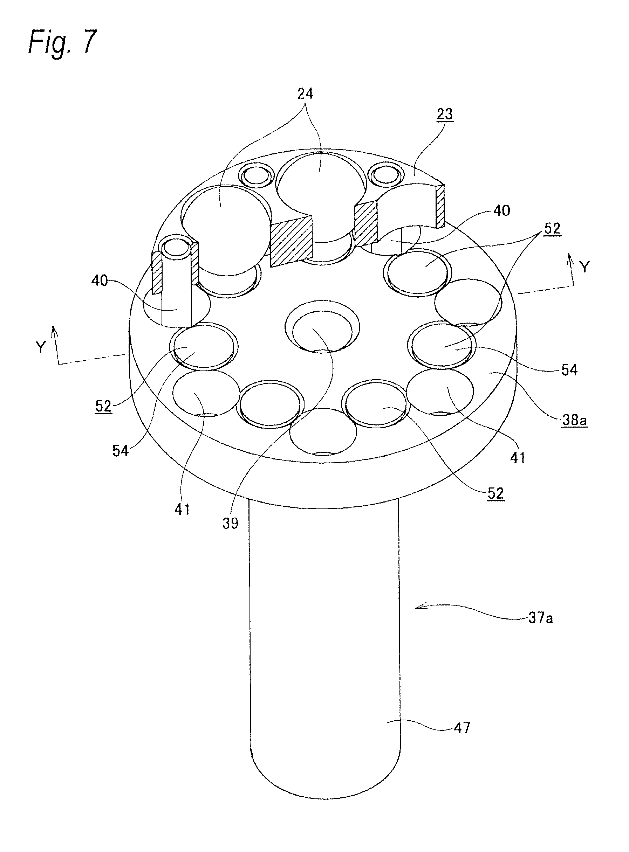

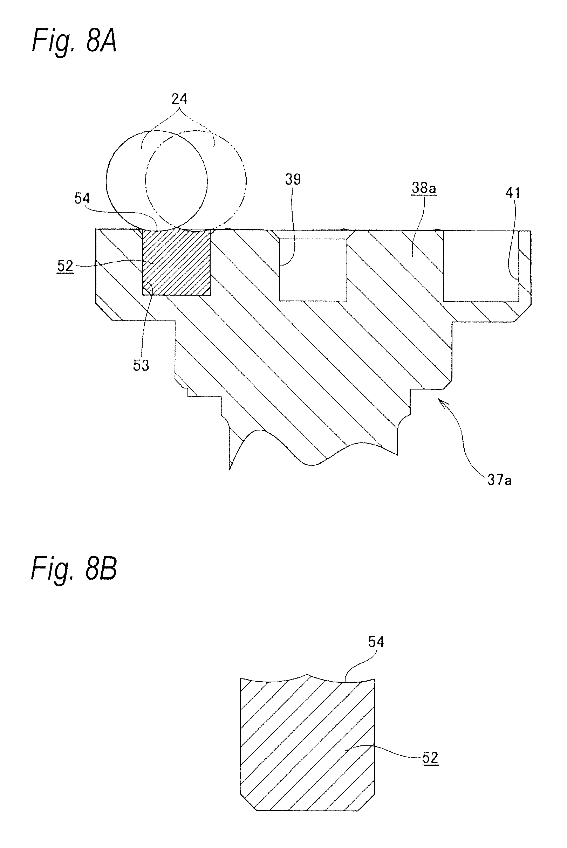

Figs. 5 to 8B show a second example of an embodiment of the invention which corresponds to the configurations (1) to (7) described above. In the case of the first example of the embodiment described above, as shown in Figs. 1 to 2, of the guide groove 25 of the anchor plate 22 with which the balls 24 are brought into rolling contact and the proximal surface of the thrust bearing collar portion 38 of the feed-screw member 37, the proximal surface of the thrust bearing collar portion 38 is made into the flat surface. This increases the surface contact pressure at the contact surface between the rolling surfaces of the balls 24 and the proximal surface of the thrust bearing collar portion 38 to a high level, resulting in a possibility of producing damage such as flaking or seizing in the proximal surface of the thrust bearing collar portion 38. The occurrence of the damage described above becomes remarkable in particular when the feed-screw member 37 is made of a material softer than a material of which the balls 24 are made as in the case of the balls 24, 24 being made of a high carbon chrome bearing steel such as SUJ2 and the feed-screw member 37 of a carbon steel such as S45C.

In the case of the second example, reinforcement members 52, 52 which are made of a material such as high carbon chrome bearing steel like SUJ2, titanium alloy or ceramics which is harder than a metallic material such as carbon steel of which a feed-screw member 37a is made are embedded in portions of a proximal surface of a thrust bearing collar portion 38a which makes up the feed-screw member 37a with which balls 24, 24 are brought into rolling contact. Namely, the reinforcement members 52, 52 having a circular cylindrical shape are press fitted in recess portions 53 to be fixed in place therein, the recess portions 53 being provided in the same number (seven portions in the example shown in the drawing) as that of balls 24, 24 on the proximal surface of the thrust bearing collar portion 38a. Then, raceway surfaces 54, 54 are provided individually on distal end faces of the reinforcement members 52, 52, the raceway surfaces 54, 54 having a sectional shape which is a partially arc-like shape having a radius of curvature of one half or larger the diameter of the balls 24.

According to an electric disc brake apparatus of the second example configured as has been described above, the reinforcement members 52, 52 made of the harder material are embedded in the portions on the proximal surface of the thrust bearing collar portion 38a with which the rolling surfaces of the balls 24 are brought into rolling contact, and therefore, the damage such as flaking can be made difficult to be produced in the proximal surface of the thrust bearing collar portion 38a. Additionally, the raceway surfaces 54, 54 having the partially arc-like sectional shape are provided on the distal end faces of the reinforcement members 52, 52, and therefore, the rolling surfaces of the balls 24, 24 can be brought into line contact with the raceway surfaces 54, 54. This suppresses the surface contact pressure between the surfaces of the balls 24 and the raceway surfaces 54 to a lower level than that of the first example of the embodiment described above. From this point, too, the production of the damage to the proximal surface of the thrust bearing collar portion 38a can be restricted. In case the production of the damage such as flaking can be prevented, the distal end faces of the reinforcement members 52, 52 can be made into flat surfaces.

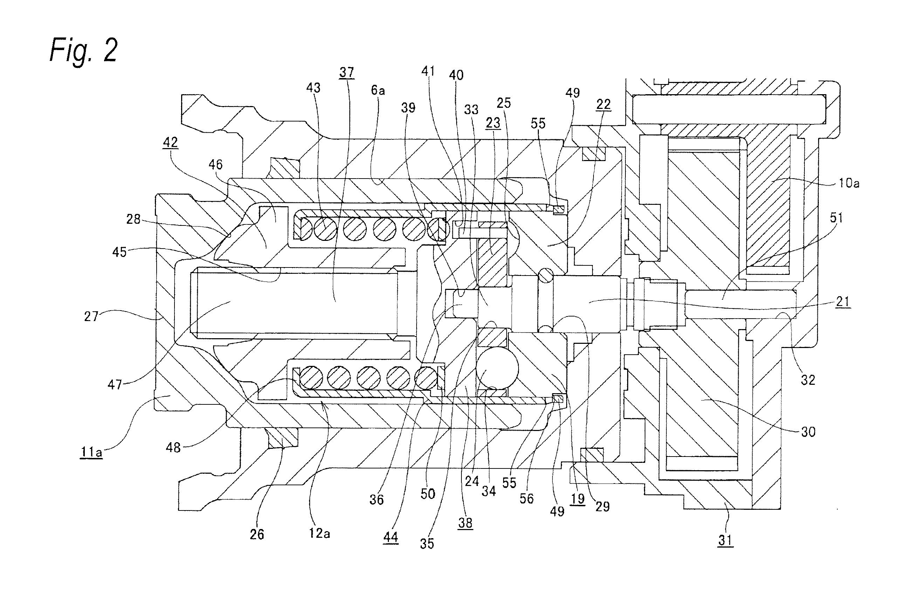

In the case of the second example, the locking projecting pieces 49, 49 (refer to Fig. 2) provided in the first example of the embodiment are not provided. Locking pins 59, 59 which are inserted through circular holes 58, 58 which are provided at a plurality of circumferential locations on a proximal end portion of a spring holder 44a are brought into engagement with engaging recess portions 57a, 57a which are provided on an outer circumferential surface of an anchor plate 22a at portions which match those circular holes 58, 58. This fixes the spring holder 44a in such a state that the spring holder 44a is prevented from rotating and being displaced in an axial direction relative to the anchor plate 22a. In addition, a sleeve 60 is fitted on the distal end portion of the spring holder 44a, whereby the spring holder 44a is allowed to rotate smoothly within a cylinder space 6a.

The constructions and functions of the other portions are similar to those of the first example of the embodiment, and therefore, the repeated description and illustration thereof will be omitted here.

### [Third Example of Embodiment]

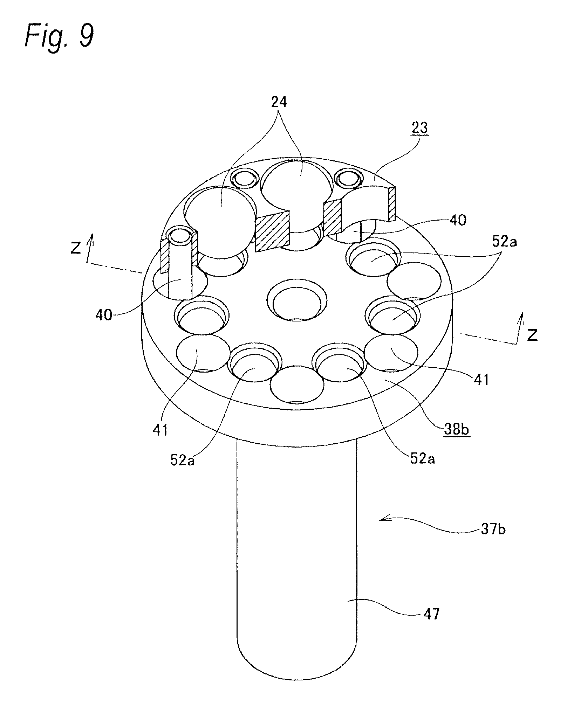

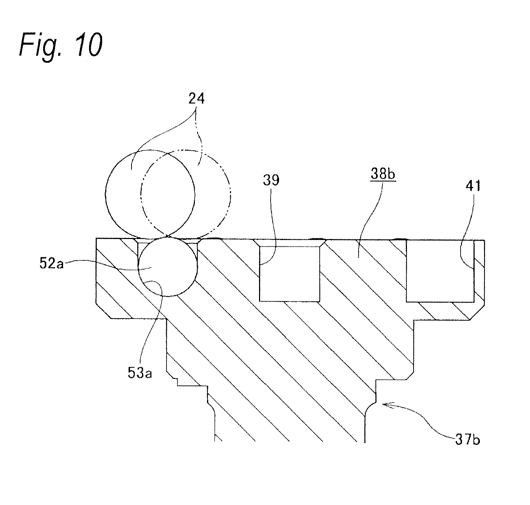

Figs. 9 to 10 show a third example of an embodiment of the invention which corresponds to the configurations (1) to (6) and (8) described above. In the case of the third example, spherical reinforcement members 52a, 52a which are made of a material harder than a metallic material of which a feed-screw member 37b is made are embedded in portions of a proximal surface of a thrust bearing collar portion 38b which makes up the feed-screw member 37b with which balls 24, 24 are brought into rolling contact, and the portions with which rolling surfaces of the balls 24 are brought into rolling contact is formed into a partially spherical projecting curved surface. Namely, the reinforcement members 52a, 52a are press fitted in recess portions 53a, 53a which are provided on the proximal surface of the thrust bearing collar portion 38b to be fixed in place therein. This allows the rolling surfaces of the balls 24, 24 to be brought into point contact with the reinforcement members 52a, 52a embedded. As a result, a slip can be made difficult to be produced between the rolling surfaces of the balls 24, 24 and the proximal surface of the thrust bearing collar portion 38b, whereby the sliding friction is reduced, which realizes an increase in the transmission efficiency of a ball type speed reduction machine 19 (refer to Fig. 1).

The constructions and functions of the other portions are similar to those of the first and second examples of the embodiments described above, and therefore, the repeated description and illustration thereof will be omitted here.

Here, the characteristics of the examples of the embodiments of the electric disc brake apparatus according to the invention will be briefly summarized by item by item below.
[1] Then electric disc brake apparatus including:
   the rotor 1 configured to rotate together with a wheel;
   the pad support portion (the support) which is supported on the body so as to lie adjacent to the rotor 1;
   the pair of outboard and inboard pads (the inboard pad and the outboard pad) 2, 3 which are supported on the pad support portion (the support) so as to be displaced in the axial direction while holding the rotor 1 from both sides thereof in the axial direction;
   the piston 11 a which is provided in the cylinder space 6a which is provided so as to face at least one pad (inboard pad) of the pair of pads (the inboard pad and the outboard pad) 2, 3, so as to be displaced in the axial direction of the rotor 1; and
   the electric actuator which is displaced by the electric motor 8a functioning as the drive source in the direction in which the piston 11a is pushed out of the cylinder space 6a to thereby bring both the pair of pads (the inboard pad and the outboard pad) 2, 3 into press contact with both the axial surfaces of the rotor 1, wherein
   the electric actuator has the electric motor 8a, the ball type speed reduction machine 19 and the converter device (the feed-screw device) 12a,
   the electric motor 8a has the output shaft 20a which is driven to rotate in both directions when energized,
   the ball type speed reduction machine 19 includes the anchor plate 22 which is provided at the deep end portion of the cylinder space 6a in such a state that the anchor plate 22 is prevented from rotating when the ball type speed reduction machine 19 operates and from being displaced axially in the direction in which the anchor plate 22 moves away from the piston 11 a, the input shaft 21 which is provided in such a state that the input shaft 21 is inserted through the through hole 29 provided in the central portion of the anchor plate 22 and which is configured to rotate in both directions when the electric motor 8a is energized, the annular ball retaining member (the cage) 23 which moves eccentrically relative to the rotational center of the input shaft 21 as the input shaft 21 rotates, the plurality of balls 24 which are retained in the rolling manner in the plurality of circumferential locations on the ball retaining member (the cage) 23, and the guide groove 25 which is formed on at least one (the surfaces of anchor plate 22 which faces the thrust bearing collar portion 38) of the pair of surfaces which hold the balls 24 along the axial direction of the piston 11a and which is formed into the cycloidal curve as its circumferential shape and is configured to take out the rotational motion of the ball retaining member (the cage) 23 as the output, and
   the converter device (the feed-screw device) 12a converts the rotational output of the ball type speed reduction machine 19 into the straight-line motion to displace the piston 11 a in the axial direction.
[2] The electric disc brake apparatus according to [1] above, wherein
   the electric actuator includes the presser member 42 and the feed-screw member 37 which make up the converter device (the feed-screw device) 12a and the preloading member (the compression coil spring) 43 in addition to the electric motor 8a and the ball type speed reduction machine 19,
   the piston 11a has the bottomed cylindrical shape in which the distal side which is then end portion facing the pad (the inboard pad) 2 is closed by the bottom portion 27 and a proximal side is opened,
   the presser member 42 has the threaded hole 45 in the central portion and is incorporated in the piston 11 a at the portion closer to the bottom portion 27 so as to be prevented from rotating relative to the piston 11 a and to be displaced in the axial direction relative to the piston 11a,
   the feed-screw member 37 has the external thread portion 47 which is provided from the distal end portion which is the end portion closer to the bottom portion 27 of the piston 11a to the middle portion for screw engagement with the threaded hole 45 and the thrust bearing collar portion 38 having the outwardly oriented flange-like shape which is provided at the proximal end portion, wherein the preloading member (the compression coil spring) 43 imparts the force to hold elastically the balls 24 between the pair of surfaces (the surface of the anchor plate 22 which faces the thrust bearing collar portion 38 and the proximal surface of the thrust bearing collar portion 38) configured to hold the balls 24 therebetween to produce the resistance against the balls 24 attempting to roll so as to impart the resistance against relative rotation between the input shaft 21 which is the input portion of the ball type speed reduction machine 19 and the external thread portion 47 which is the output portion of the same, and
   the magnitude of the resistance imparted to the relative rotation between the input shaft 21 and the external thread portion 47 by the preloading member (the compression coil spring) 43 is larger than the resistance against the axial movement of the presser member 42 imparted by the screw engagement between the external thread portion 47 and the threaded hole 45 which occurs in association with rotation of the feed-screw member 37 in the non-braking state in which the separation occurs at least either between the distal end portion of the presser member 42 and the inner surface of the bottom portion 27 of the piston 11 a or between the side surfaces of the rotor 1 and the linings 18, 18 of the pads (the inboard pad and the outboard pad) 2, 3.
[3] The electric disc brake apparatus according to [2] above, wherein
   the preloading member is the compression coil spring 43,
   the compression coil spring 43 is retained within the cylindrical spring holder 44 which includes the inwardly oriented locking collar portion 48 at the distal end portion,
   the proximal end portion of the spring holder 44 is locked on the anchor plate 22 in such a state that the locking collar portion 48 is prevented from being displaced in the direction in which it moves away from the anchor plate 22, and
   the compression coil spring 43 is provided between the locking collar portion 48 and the thrust bearing collar portion 38 in such a state that the compression coil spring 43 is compressed elastically along the full length thereof.
[4] The electric disc brake apparatus according to [3] above, wherein the ball retaining member is the annular cage 23, wherein the balls 24 are provided in the rolling manner within the pockets 34 which are provided at the plurality of circular locations on the cage 23, and wherein the cage 23 and the thrust bearing collar portion 38 are connected together by the coupling configured to transfer the rotational motion of the cage 23 while permitting the eccentric motion of the cage 23.
[5] The electric disc brake apparatus according to [4] above, wherein
   the guide groove 25 is provided on the surface of the anchor plate 22 which faces the thrust bearing collar portion 38, and
   the guide groove 25 has the hypocycloidal or epicycloidal curvilinear shape as its shape along the center line thereof and as its sectional shape the arc-like shape having the radius of curvature which is larger than one half the diameter of each ball 24.
[6] The electric disc brake apparatus according to any one of [1] to [5] above, wherein
   the guide groove 25 is provided on either (the surface of the anchor plate 22 which faces the thrust bearing collar portion 38) of the pair of surfaces which hold the balls 24 therebetween and the reinforcement member 52 is embedded in the portion of the other surface (the proximal surface of the thrust bearing collar portion 38a) with which the balls 24 are brought into rolling contact, the reinforcement member 52 being made of the harder material than the material of which the member having the other surface (the proximal surface of the thrust bearing collar portion 38a) is made.
[7] The electric disc brake apparatus according to [6] above, wherein
   the raceway surface 54 is provided on the reinforcement member 52, the raceway surface 52 having the sectional shape which is partially formed into the arc-like shape having the radius of curvature which is equal to or larger than one half the diameter of each ball 24.
[8] The electric disc brake apparatus according to [6] above, wherein
   the partially spherical, convexly curved surface is provided on the reinforcement member 52a.

The electric disc brake apparatus of the invention is not limited to the examples of the embodiments described heretofore and hence can be modified or improved as required. In addition, the materials, shapes, dimensions, numbers, locations of the constituent elements in the examples are arbitrary and are not limited to those described in the examples, provided that the invention can be achieved.

This patent application is based on Japanese Patent Application (Japanese Patent Application No. 2012-165357) filed on July 26, 2012 and Japanese Patent Application (Japanese Patent Application No. 2012-245674) filed on November 7, 2012, the contents of which are incorporated herein by reference.

### Industrial Applicability

In the ball type speed reduction machine used in carrying out the invention, the invention is not limited to the construction shown in the figures in which the guide groove is formed only on the anchor plate side, and hence, the construction described in Patent Document 9 described before can also be adopted. Namely, the ball type speed reduction machine can also be made use of in which the first guide groove which is formed into the hypocycloidal curvilinear shape as a whole is formed on one of the surfaces facing each other, and the second guide groove which is formed into the epicycloidal curvilinear shape as a whole is formed on the other, and the plurality of balls are disposed between both the grooves. In short, any construction can be made use of as long as the construction is such that a large speed reduction ratio can be obtained by a thin construction and that the rotational torque can be increased to some extent by imparting a predetermined preload to the balls.

Additionally, as to the coupling which transfers the rotational motion of the ball retaining member to the thrust bearing collar portion, a different construction such as the construction described in Patent Document 9 described above can also be adopted. As this occurs, annular recess grooves are formed at a plurality of circumferential locations on the surfaces of the ball retaining member and the thrust bearing collar portion which face each other, and a plurality of balls provided separately from each of balls which make up a main body portion of the ball type speed reduction machine are held between the annular recess grooves.

With the construction of the invention, although the electric motor can be used commonly between a plurality of pistons, speed reduction machines need to be provided individually for pistons. Thus, compared with a hydraulic disc brake apparatus, the capacity of the portion where the devices related to the driving of the pistons is increased. Consequently, the invention is preferably carried out with a floating caliper type disc brake which has a less number of pistons and facilitates the ensuring of a space where to install the pistons. However, in case the installation space can be ensured as in a large vehicle, the invention can be carried out with an opposed piston type disc brake.

Additionally, the construction of the invention can also be applied to a service brake with which a running vehicle is slowed or stopped by depression of a brake pedal by the driver or a parking brake with which the vehicle is kept in the stopped state.

### Reference Signs List

- 1: rotor
- 2: inboard pad (pad)
- 3: outboard pad (pad)
- 4: caliper
- 5: caliper claw
- 6,: 6a cylinder space
- 7: thrust generation device
- 8,: 8a electric motor
- 9: output shaft
- 10, 10a: speed reduction machine
- 11, 11a: piston
- 12, 12a: feed-screw device (converter device)
- 13: drive side rotor
- 14: drive side ramp groove
- 15: driven side stator
- 16: drive side ramp groove
- 17: ball
- 18: lining
- 19: ball type speed reduction machine
- 20a: output shaft
- 21: input shaft
- 22: anchor plate
- 23: cage (ball retaining member)
- 24: ball
- 25: guide groove
- 26: sealing
- 27: bottom portion
- 28: bearing surface
- 29: through hole
- 30: speed reduction large gearwheel
- 31: casing
- 32: proximal side support hole
- 33: eccentric shaft portion
- 34: pocket
- 35: center hole
- 36: support shaft portion
- 37, 37a, 37b: feed-screw member
- 38, 38a, 38b: thrust bearing collar portion
- 39: distal side support hole
- 40: transfer pin
- 41: recessed receiving hole
- 42: presser member
- 43: compression coil spring (preloaded member)
- 44: spring holder
- 45: threaded hole
- 46: collar portion
- 47: external thread portion
- 48: locking collar portion
- 49: locking projecting piece
- 50: seat plate
- 51: support shaft
- 52, 52a: reinforcement member
- 53, 53a,: recess portion
- 54: raceway surface
- 55: circumferential elongated hole
- 56: stepped locking portion
- 57, 57a: engaging recess portion
- 58: circular hole
- 59: engaging pin
- 60: sleeve

## Claims

1. An electric disc brake apparatus comprising:
a rotor configured to rotate together with a wheel;
a pad support portion which is supported on a body so as to lie adjacent to the rotor;
a pair of outboard and inboard pads which are supported on the pad support portion so as to be displaced in an axial direction while holding the rotor from both sides thereof in the axial direction;
a piston which is provided in a cylinder space which is provided so as to face at least one of the pair of pads, so as to be displaced in the axial direction of the rotor; and
an electric actuator which is displaced by an electric motor functioning as a drive source in a direction in which the piston is pushed out of the cylinder space to thereby bring both the pair of pads into press contact with both axial surfaces of the rotor, wherein
the electric actuator has the electric motor, a ball type speed reduction machine and a converter device,
the electric motor has an output shaft which is driven to rotate in both directions when energized,
the ball type speed reduction machine comprises an anchor plate which is provided at a deep end portion of the cylinder space in such a state that the anchor plate is prevented from rotating when the ball type speed reduction machine operates and from being displaced axially in a direction in which the anchor plate moves away from the piston, an input shaft which is provided in such a state that the input shaft is inserted through a through hole provided in a central portion of the anchor plate and which is configured to rotate in both directions when the electric motor is energized, an annular ball retaining member which moves eccentrically relative to a rotational center of the input shaft as the input shaft rotates, a plurality of balls which are retained in a rolling manner in a plurality of circumferential locations on the ball retaining member, and a guide groove which is formed on at least one of a pair of surfaces which hold the balls along an axial direction of the piston and which is formed into a cycloidal curve as its circumferential shape and is configured to take out a rotational motion of the ball retaining member as an output, and
the converter device converts the rotational output of the ball type speed reduction machine into a straight-line motion to displace the piston in the axial direction.

2. The electric disc brake apparatus according to Claim 1, wherein
the electric actuator comprises a presser member and a feed-screw member which make up the converter device and a preloading member in addition to the electric motor and the ball type speed reduction machine,
the piston has a bottomed cylindrical shape in which a distal side which is an end portion facing the pad is closed by a bottom portion and a proximal side is opened,
the presser member has a threaded hole in a central portion and is incorporated in the piston at a portion closer to the bottom portion so as to be prevented from rotating relative to the piston and to be displaced in the axial direction relative to the piston,
the feed-screw member has an external thread portion which is provided from a distal end portion which is an end portion closer to the bottom portion of the piston to a middle portion for screw engagement with the threaded hole and a thrust bearing collar portion having an outwardly oriented flange-like shape which is provided at a proximal end portion,
the preloading member imparts a force to hold elastically the balls between the pair of surfaces configured to hold the balls therebetween to produce a resistance against the balls attempting to roll so as to impart a resistance against relative rotation between the input shaft which is an input portion of the ball type speed reduction machine and the external thread portion which is an output portion of the same, and
a magnitude of a resistance imparted to the relative rotation between the input shaft and the external thread portion by the preloading member is larger than a resistance against an axial movement of the presser member imparted by a screw engagement between the external thread portion and the threaded hole which occurs in association with rotation of the feed-screw member in a non-braking state in which a separation occurs at least either between a distal end portion of the presser member and an inner surface of the bottom portion of the piston or between the side surfaces of the rotor and linings of the pads.

3. The electric disc brake apparatus according to Claim 2, wherein
the preloading member is a compression coil spring,
the compression coil spring is retained within a cylindrical spring holder which includes an inwardly oriented locking collar portion at a distal end portion, wherein a proximal end portion of the spring holder is locked on the anchor plate in such a state that the locking collar portion is prevented from being displaced in a direction in which it moves away from the anchor plate, and
the compression coil spring is provided between the locking collar portion and the thrust bearing collar portion in such a state that the compression coil spring is compressed elastically along the full length thereof.

4. The electric disc brake apparatus according to Claim 3, wherein
the ball retaining member is an annular cage,
the balls are provided in a rolling manner within pockets which are provided at a plurality of circular locations on the cage, and
the cage and the thrust bearing collar portion are connected together by a coupling configured to transfer a rotational motion of the cage while permitting an eccentric motion of the cage.

5. The electric disc brake apparatus according to Claim 4, wherein
the guide groove is provided on a surface of the anchor plate which faces the thrust bearing collar portion, and
the guide groove has a hypocycloidal or epicycloidal curvilinear shape as its shape along a center line thereof and as its sectional shape an arc-like shape having a radius of curvature which is larger than one half a diameter of each ball.

6. The electric disc brake apparatus according to any one of Claims 1 to 5, wherein
the guide groove is provided on either of the pair of surfaces which hold the balls therebetween and a reinforcement member is embedded in a portion of the other surface with which the balls are brought into rolling contact, the reinforcement member being made of a harder material than a material of which a member having the other surface is made.

7. The electric disc brake apparatus according to Claim 6, wherein
a raceway surface is provided on the reinforcement member, the raceway surface having a sectional shape which is partially formed into an arc-like shape having a radius of curvature which is equal to or larger than one half the diameter of each ball.

8. The electric disc brake apparatus according to Claim 6, wherein
a partially spherical, convexly curved surface is provided on the reinforcement member.
